# FASCICULE DE BREVET EUROPEEN

(11) **EP 3 388 585 B1**
(45) Date de publication et mention de la délivrance du brevet: **06.09.2023**
(21) Numéro de dépôt: 18166908.6
(22) Date de dépôt: 11.04.2018
(51) Int. Cl.: E03B 3/02, E03B 1/04

(54) **INSTALLATION HYDRAULIQUE POUR GÉRER L'ALIMENTATION EN EAU D'UN ÉLÉMENT**
HYDRAULISCHE ANLAGE ZUR STEUERUNG DER WASSERZUFUHR ZU EINEM ELEMENT
HYDRAULIC SYSTEM FOR MANAGING THE WATER SUPPLY TO A MEMBER

(30) Priorité: 11.04.2017 FR 1753172
(43) Date de publication de la demande: 17.10.2018
(73) Titulaire: Kipopluie, 33380 Mios (FR)
(72) Inventeur: ROUSSEL, Jacques-Albert, 33200 Caudéran (FR)
(74) Mandataire: Plasseraud IP

(56) Documents cités:
- WO-A1-2013/045673
- US-A1- 2011 308 618

## Description

### ARRIERE-PLAN DE L'INVENTION

### Domaine de l'invention

La présente invention concerne une installation hydraulique pour gérer et traiter l'alimentation en eau d'un élément telle qu'une installation sanitaire ou d'arrosage, selon la préambule de la revendication 1.

### Arrière-plan technologique

Il est connu que les installations sanitaires consomment une grande quantité d'eau potable prélevée directement sur le réseau d'alimentation en eau courante.

Non seulement cette consommation d'eau potable est coûteuse en raison de coûts d'épuration de plus en plus élevés, mais l'eau potable peut également s'avérer une ressource fragile notamment dans les régions disposant de peu de réserves naturelles.

Or, il n'est pas nécessaire d'utiliser de l'eau potable pour les sanitaires d'un édifice tel qu'une habitation ou un bâtiment industriel.

L'eau de pluie, non calcaire et non chlorée, peut être mise en oeuvre dans les chasses d'eau des toilettes. Elle peut encore être utilisée dans un lave-linge ou pour l'arrosage d'un espace vert ou d'un aménagement paysager résidentiel.

On constate ainsi que la récupération de l'eau de pluie autorise une réduction significative de la consommation en eau potable d'une habitation.

Le besoin croissant pour une meilleure utilisation des ressources disponibles a, par conséquent, conduit à la mise en place de réservoirs de stockage d'eau de pluie.

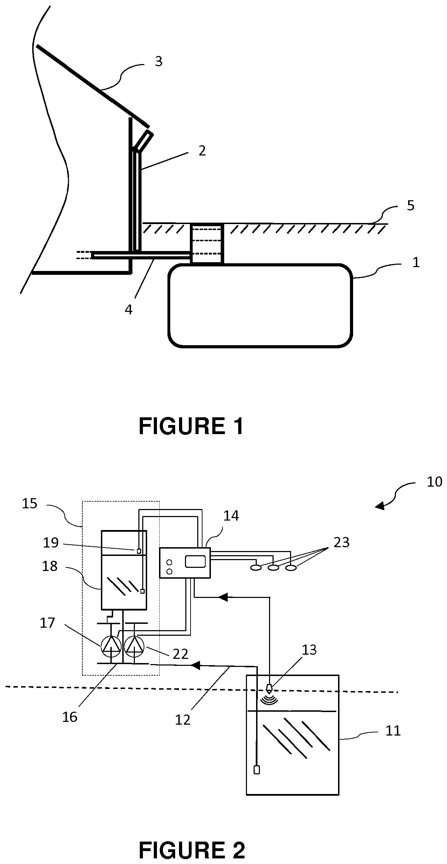

Comme le montre la Figure 1, on connaît des réservoirs 1 de stockage équipés d'une prise d'eau reliée à une canalisation 2 telle qu'une gouttière, recueillant par gravité les eaux pluviales s'écoulant sur la toiture 3 d'un bâtiment.

Le réservoir 1 de stockage est une chambre, de préférence, hermétiquement close pour protéger les eaux de pluie collectées des contaminations extérieures et mise à l'abri de la chaleur, du gel et de la lumière pour éviter le développement notamment d'algues.

Un tel réservoir 1 est placé en extérieur, soit à l'air libre, soit en étant enterrée en tout ou partie.

Un tel réservoir 1 d'eau de pluie peut alors être relié par un réseau 4 de transport en eau de pluie, entièrement distinct du réseau de distribution en eau potable (non représenté), à des toilettes pour la chasse.

Il n'existe cependant pas de système permettant d'assurer la gestion de cette eau de pluie, par exemple lorsque le niveau de l'eau de pluie dans le réservoir descend en deçà d'un seuil critique.

On constate également qu'il n'est pas possible de centraliser sur un équipement portable, ou sur un ordinateur fixe relié à un réseau internet, des informations relatives à l'état du réseau de transport de l'eau de pluie, ni d'agir à distance sur ce réseau.

Une installation hydraulique avec un réseau d'acheminement en eau de pluie et un réseau d'alimentation en eau potable est décrite dans le document US2011/0308618.

### Objet de l'invention

La présente invention vise à pallier les inconvénients de l'art antérieur en proposant installation hydraulique pour gérer à distance l'alimentation en eau d'un élément tel qu'un appareil consommateur d'eau, simple dans sa conception et dans son mode opératoire, fiable et économique, permettant à l'utilisateur d'obtenir des informations sur la consommation en eau de pluie et sur l'état du réseau d'acheminement en eau de pluie.

La présente invention vise aussi une installation d'adduction commandé à distance pour pallier aux variations de la demande afin de garantir une ressource suffisante et supérieure au débit distribué.

La présente invention vise également une telle installtion permettant à l'utilisateur d'intervenir à distance sur le réseau d'acheminement en eau de pluie.

La présente invention a encore pour but de délivrer une eau de pluie présentant une qualité optimale par rapport à sa destination.

### BREVE DESCRIPTION DE L'INVENTION

A cet effet, l'invention concerne une installation hydraulique selon la revendication 1:

Avantageusement, une telle installation permet de garantir une alimentation permanente en eau d'un élément d'une installation hydraulique. En effet, cette installation permet d'assurer l'alimentation d'un élément tel qu'un appareil consommateur d'eau, avec exclusivement de l'eau de pluie tant que cette dernière est disponible puis à basculer sur de l'eau potable pour alimenter ce dernier lorsque l'eau de pluie vient à manquer, afin d'assurer une alimentation permanente en eau de ce dernier. Avantageusement, une telle installation est particulièrement économe.

De préférence, la valeur seuil dans chaque réservoir est configurée pour assurer un débit Q en eau de pluie supérieur au débit de fuite de la distribution en eau. En d'autre terme, cette valeur seuil garantit une ressource suffisante et supérieure au débit distribué pour pallier aux éventuelles variations dans la demande.

De manière alternative, l'élément de l'installation hydraulique demandant un débit d'eau Q_{D} supérieur au débit Qₑₐᵤₚₗᵤᵢₑ susceptible d'être fourni par ledit réseau d'acheminement en eau de pluie, on alimente également ledit élément avec un débit d'eau potable Q_{eaupotable} tel que Qₑₐᵤₚₗᵤᵢₑ + Q_{euapotable} ≥ Q_{D}.

Au moins un capteur peut avantageusement être mis en oeuvre pour déterminer le débit Q_{D} demandé par l'élément afin d'adapter la nature de l'eau alimentant cet élément, à savoir de l'eau de pluie ou un mélange d'eau de pluie.

De manière avantageuse, le niveau de l'eau dans chaque réservoir est mesuré à l'aide d'au moins un capteur de niveau tel qu'une sonde radar, pour éviter tout contact entre cette sonde et l'eau de pluie, cette dernière étant susceptible de présenter une acidité capable d'endommager le capteur de niveau.

Dans différents modes de réalisation particuliers de cette installation de gestion, chacun ayant ses avantages particuliers et susceptibles de nombreuses combinaisons techniques possibles:
- on peut déterminer au moins la consommation en eau potable et la consommation en eau de pluie dudit élément à partir desdites données mesurées.

De préférence, on peut réaliser les étapes supplémentaires suivantes : transmettre une requête relative à la consommation d'eau dudit élément via un réseau de communication sans fil et recevoir des données concernant ladite consommation dudit élément via un réseau de communication sans fil.
- on peut surveiller au moins ledit réseau d'acheminement en eau de pluie pour détecter un éventuel problème tel qu'une fuite, et en cas de problème, on informe l'utilisateur par l'envoi d'au moins une alerte via un réseau de communication sans fil.

De manière avantageuse, la sortie de chaque réservoir et/ou de chaque ligne d'alimentation reliant un réservoir correspondant audit élément, comprenant au moins une vanne configurée pour être actionnable à distance, on fournit également audit utilisateur au moins une commande lui permettant de contrôler ledit réseau d'acheminement en eau de pluie, l'activation de ladite ou d'au moins une desdites commandes conduisant à l'envoi d'au moins un signal d'instruction via ledit réseau de communication sans fil à au moins une desdites vannes pour la ou les actionner.

Bien entendu, on peut fournir également audit utilisateur un état, activée ou non activée, de chaque vanne en temps réel.

De préférence, la situation étant regardée comme critique, l'actionnement d'au moins une desdites vannes est commandé avant l'envoi d'au moins ladite alerte.
- on réalise au moins une mesure de l'eau de pluie pour déterminer sa qualité, et suite à ladite mesure, on modifie éventuellement ladite eau de pluie pour améliorer sa qualité.

De manière avantageuse, ladite au moins une mesure et l'amélioration qui est apportée éventuellement à ladite eau de pluie sont réalisées de manière automatique.

Selon un aspect de l'invention, on réalise ladite au moins une mesure directement dans ledit ou au moins un desdits réservoirs de préférence, avant utilisation de ladite eau de pluie.

Alternativement, on réalise un prélèvement d'eau de pluie sur ledit réseau d'acheminement en aval dudit au moins un réservoir et en ce qu'on réalise ladite au moins une mesure dans l'eau de pluie ainsi prélevée.
- on réalise au moins une des opérations suivantes : mesurer le pH de ladite eau de pluie, mesurer la quantité de nitrates et/ou de phosphates contenus dans ladite eau de pluie, mesurer la dureté de l'eau de pluie, analyser ladite eau de pluie pour détecter des micro-organismes présents dans celle-ci.

De préférence, ayant analysé ladite eau de pluie et détecté des micro-organismes présents dans cette dernière, on expose ladite eau de pluie à un champ électrique pulsé ou à un rayonnement ultra-violet (UV) pour tuer lesdits micro-organismes.

Bien entendu, et de manière plus générale, on met en oeuvre tout moyen pour éliminer les micro-organismes présents dans ladite eau de pluie.
- on évalue l'impact qualitatif de ladite eau délivrée par ledit élément et on détermine la ou les modifications à apporter à ladite eau de pluie pour améliorer ledit impact qualitatif.

A titre d'exemple, ledit élément étant un dispositif d'arrosage, on évalue l'impact de ladite eau délivrée par ledit dispositif d'arrosage sur un objet tel qu'un gazon et on détermine la ou les modifications à apporter à ladite eau de pluie pour améliorer ledit impact sur cet objet.

Chaque réseau d'acheminement en eau de pluie de cette installation comporte au moins un réservoir de stockage d'eau de pluie et au moins une ligne d'alimentation en eau de pluie pour transporter ladite eau de pluie vers ledit élément.

Selon l'invention la installation hydrauque comporte un ensemble de gestion d'alimentation en eau, cet ensemble comprenant un corps principal formant réservoir pour recevoir de l'eau potable, ce corps principal comportant une enveloppe tubulaire délimitant un volume intérieur de diamètre D, laquelle est placée dans la partie supérieure de cet ensemble et est prolongée par une réduction du corps principal, en communication de fluide avec ladite enveloppe tubulaire, ladite réduction présentant une section transversale droite qui est une portion d'un demi-cercle de rayon D/2, la surface extérieure de ladite réduction étant arrondie et placée dans le prolongement de la surface extérieure de l'enveloppe tubulaire, ledit corps principal délimitant ainsi dans la partie inférieure de cet ensemble un logement pour recevoir deux pompes et des portions de conduits, chaque pompe étant reliée d'une part à une portion de conduit destinée à être reliée à un réseau d'alimentation en eau de pluie distinct et d'autre part, à une portion de conduit pour le transport de l'eau de pluie ou potable sélectionnée.

De préférence, chaque portion de conduit destinée à être reliée à un réseau d'alimentation en eau de pluie est également reliée audit corps principal formant réservoir pour recevoir de l'eau potable, au moins une vanne permettant de choisir la nature de l'eau transportée par ladite portion de conduit.

De manière avantageuse, cette vanne est configurée pour être actionnable à distance.

Selon un aspect de cet ensemble de gestion de l'alimentation en eau, il comporte une chambre de qualité placée en parallèle d'au moins une des portions de conduit destinée à être placée sur le réseau d'alimentation en eau de pluie pour recevoir de l'eau de pluie circulant dans ledit ou un desdits réseaux et au moins un dispositif de mesure pour mesurer au moins un paramètre de ladite eau de pluie reçue dans ladite chambre de qualité.

De manière avantageuse, le dispositif de mesure est choisi dans le groupe comprenant un dispositif de mesure du pH de ladite eau de pluie, un dispositif pour mesurer la quantité de nitrates et/ou de phosphates contenus dans ladite eau de pluie, un dispositif de titration pour déterminer notamment la dureté de l'eau de pluie, un dispositif pour analyser ladite eau de pluie en vue de détecter la présence de micro-organismes dans celle-ci.

De manière avantageuse, ladite installation comporte également un ou plusieurs dispositifs de génération d'électricité solaire pour son alimentation en énergie de sorte que celle-ci est autonome.

De manière avantageuse, ladite installation comporte aussi un moyen de communication sans fil pour envoyer et/ou recevoir des messages sur un réseau d'accès cellulaire, tels que recevoir des instructions adressées par un opérateur ou encore envoyer un relevé d'état de cette installation.

De manière avantageuse, ladite installation comporte un moyen de récupération de la chaleur du volume collecté tel qu'un échangeur.

Cette installation peut encore être connectée à des autres installations.

### BREVE DESCRIPTION DES DESSINS

D'autres avantages, buts et caractéristiques particulières de la présente invention ressortiront de la description qui va suivre, faite, dans un but explicatif et nullement limitatif, en regard des dessins annexés, dans lesquels:
- la Figure 1 montre une cuve de récupération des eaux de pluie de l'art antérieur, cette dernière étant enterrée et recevant les eaux de pluie canalisées par une gouttière ;
- la Figure 2 est une représentation schématique partielle d'une installation hydraulique selon un mode de réalisation particulier de la présente invention ;
- la Figure 3 est une vue en perspective du dispositif de basculement de l'alimentation en eau de l'installation de la Fig. 2;

### DESCRIPTION DETAILLEE DE MODE DE REALISATION DE L'INVENTION

Tout d'abord, on note que les figures ne sont pas à l'échelle.

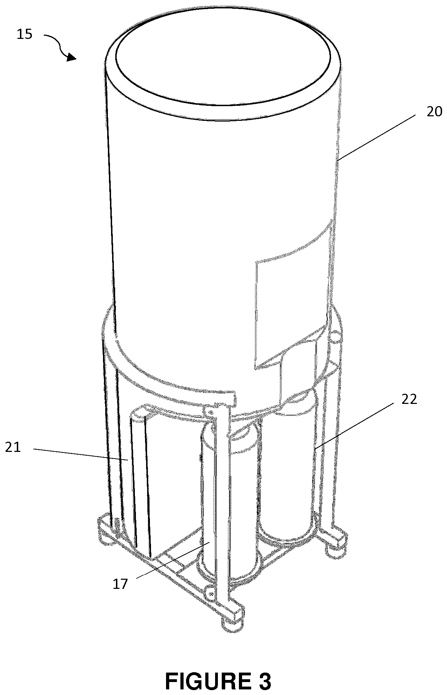

Les Figures 2 et 3 montrent une installation hydraulique selon un mode de réalisation particulier de la présente invention.

Cette installation 10 comprend un réseau d'acheminement en eau de pluie, lequel comporte un réservoir 11 de stockage d'eau de pluie et un circuit 12 de transport d'eau pluviale, ce dernier étant relié à une sortie du réservoir 11 de stockage afin de transporter de l'eau pluviale.

Le réservoir 11 de stockage comprend un capteur 13 pour déterminer le niveau d'eau de pluie dans celui-ci, lequel est relié à une unité 14 centrale de gestion pour adresser à cette unité des signaux de mesure.

Ce capteur est avantageusement un capteur de niveau par radar ("radar level gauge" - « RLG ») permettant de mesurer un niveau de remplissage du contenu du réservoir sans avoir aucun contact avec l'eau de pluie.

L'autre extrémité du circuit de transport d'eau pluviale fait partie intégrante d'un dispositif de basculement 15 de l'alimentation en eau dans un bâtiment tel qu'une habitation ou un bâtiment industriel.

Ce dispositif de basculement 15 permet de passer d'une alimentation en eau de pluie fournie par le réseau d'acheminement à une alimentation en eau potable fournie par un réseau d'alimentation en eau potable, et inversement. Les réseaux d'acheminement en eau de pluie et d'alimentation en eau potable sont distincts pour éviter un éventuel reflux dans le réseau d'eau potable.

Cette autre extrémité du circuit de transport d'eau pluviale qui se présente sous la forme d'une portion 16 de conduit, est reliée par une de ses extrémités au reste du réseau d'acheminement en eau de pluie et est fermée à son autre extrémité. Cette portion 16 de conduit est par ailleurs connectée à une pompe 17 auto-amorçante à vitesse variable pour délivrer le débit requis à la demande en eau dans le bâtiment.

Le réseau d'alimentation en eau potable est relié au dispositif de basculement 15, et plus précisément, à une cuve 18 de stockage d'eau potable de ce dispositif.

Cette cuve 18 de stockage comporte également des capteurs 19 permettant de déterminer différents niveaux de remplissage de la cuve en eau potable, et notamment un niveau haut et un niveau bas.

Cette cuve 18 de stockage comporte une partie supérieure et une partie inférieure, la partie supérieure étant déterminée par une enveloppe tubulaire 20 délimitant un volume intérieur de diamètre D, la partie inférieure comprenant un rétrécissement 21 de cette enveloppe tubulaire de sorte que la cuve 18 délimite un logement pour accueillir au moins une pompe 17 auto-amorçante et une clarinette de distribution en communication fluidique avec le réseau d'acheminement en eau de pluie et le volume intérieur de la cuve stockant de l'eau potable.

Cette clarinette comporte notamment une portion de conduit (non représentée) placée sur le réseau de distribution d'eau dans le bâtiment, par exemple sur une installation sanitaire ainsi que la portion 16 de conduit formant extrémité du circuit de transport d'eau pluviale.

Elle peut aussi comporter une autre portion de conduit (non représentée) placée sur un second circuit redondant de transport d'eau pluviale, cette dernière étant alors connectée à une autre pompe 22 auto-amorçante logée également sous la cuve 18.

Ce dispositif de basculement 15 comporte encore une chambre de qualité (non représentée) placée en parallèle de la ou des portions de conduit placée sur le réseau d'acheminement en eau de pluie pour recevoir de l'eau de pluie circulant dans ce réseau ainsi qu'un ou plusieurs dispositifs de mesure pour mesurer un ou plusieurs paramètres de l'eau de pluie reçue dans cette chambre de qualité afin d'en déterminer la qualité.

Cette installation comprend encore une source de rayonnement ultraviolet (non représentée) pour l'élimination des micro-organismes présents dans l'eau de pluie. Cette source de rayonnement est avantageusement activée directement par l'unité 14 centrale lorsque de tels micro-organismes sont détectés dans l'eau de pluie par un appareil de mesure automatique de la toxicité de l'eau de pluie.

L'unité 14 centrale est configurée pour recevoir le ou lesdits signaux de niveau d'eau de pluie dans le réservoir 11 de stockage et actionner des vannes configurées pour être actionnables à distance afin de contrôler le réseau alimentant en eau le réseau de distribution d'eau dans le bâtiment.

Tant que le réservoir 11 est rempli d'eau de pluie à un niveau supérieur ou égal à une valeur seuil, on alimente ce réseau de distribution en eau de pluie.

L'installation comporte aussi des débitmètres 23 lesquels sont reliés à l'unité 14 centrale par une liaison filaire, cette unité 15 comportant un moyen de communication sans fil pour transmettre des données qui sont déterminées par un processeur de l'unité centrale à partir des signaux adressés par ces débitmètres 23.

Par exemple, la transmission des données par l'unité 14 centrale peut mettre en oeuvre un réseau d'accès cellulaire. Le réseau d'accès cellulaire peut être de plusieurs types (2G, 3G, 4G), chaque type de réseau étant accessible selon plusieurs technologies d'accès cellulaires (2G : EDGE, GPRS, 3G : UMTS, HSDPA, HSUPA, HSPA, HSPA+, 4G : LTE).

Il est ainsi avantageusement possible de déterminer la consommation en eau propre et en eau de pluie dans le bâtiment et d'adresser ces informations sur un terminal fixe ou mobile de l'utilisateur, par exemple un téléphone portable ou une tablette tactile portable.

On peut aussi repérer une éventuelle fuite sur un des réseaux lorsque ce réseau est équipé de vannes actionnables à distance placées en amont de ces débitmètres.

## Revendications

1. Installation (10) hydraulique pour gérer l'alimentation en eau d'un élément tel qu'un appareil consommateur d'eau, un robinet, une vanne, une bouche d'incendie, ladite installation comprenant au moins un réseau d'alimentation en eau potable et au moins un réseau d'acheminement en eau de pluie distincts l'un de l'autre, **caractérisée en ce que**
- chaque réseau d'acheminement en eau de pluie comporte au moins un réservoir (11) de stockage d'eau de pluie,
- chaque réservoir (11) de stockage comprenant également au moins un capteur (13) de niveau apte à émettre un signal de niveau d'eau de pluie dans le réservoir (11) correspondant,
- ladite installation comprenant une unité centrale (14) pour gérer l'alimentation en eau dudit élément, ledit élément étant relié de manière séparée audit réseau d'alimentation en eau potable et audit réseau d'acheminement en eau de pluie, ladite unité centrale (14) étant configurée pour recevoir le ou lesdits signaux de niveau d'eau de pluie et actionner des vannes de l'installation configurées pour être actionnables à distance afin de contrôler le réseau alimentant en eau ledit élément, de sorte que
- tant que ledit réservoir (11) est rempli d'eau de pluie à un niveau supérieur ou égal à une valeur seuil, alimenter ledit élément en eau de pluie, et
- utiliser de l'eau potable pour alimenter ledit élément sur demande ou lorsque le niveau dudit réservoir (11) est inférieur à ladite valeur seuil,
- ladite installation comprenant au moins un compteur d'eau et/ou au moins un débitmètre (23) pour au moins ledit réseau d'acheminement en eau de pluie,
- chaque compteur d'eau et/ou chaque débitmètre (23) étant reliés à ladite unité centrale (14), laquelle comporte un moyen de communication sans fil pour transmettre des données, ladite unité centrale (14) étant alors destiné à être reliée à un réseau de communication sans fil, ou chaque compteur d'eau et/ou chaque débitmètre (23) étant configurés pour la transmission sans fil de données mesurées par ce ou ces derniers, chaque compteur d'eau et/ou chaque débitmètre (23) étant alors destinés à être reliés à un réseau de communication sans fil, et **en ce que**
- ladite installation comportant un ensemble de gestion d'alimentation (18) en eau comprenant un corps principal formant réservoir pour recevoir de l'eau potable, ce corps principal comportant une enveloppe tubulaire (20) délimitant un volume intérieur de diamètre D, laquelle est placée dans la partie supérieure dudit ensemble et est prolongée par une réduction (21) du corps principal, en communication de fluide avec ladite enveloppe tubulaire (20), ladite réduction (21) présentant une section transversale droite qui est une portion d'un demi-cercle de rayon D/2, la surface extérieure de ladite réduction (21) étant arrondie et placée dans le prolongement de la surface extérieure de l'enveloppe tubulaire (20), ledit corps principal délimitant ainsi dans la partie inférieure dudit ensemble, un logement pour recevoir deux pompes (17, 22) et des portions de conduits, chaque pompe (17,22) étant reliée d'une part à une portion de conduit (16) reliée à un réseau d'alimentation en eau de pluie distinct et d'autre part, à une portion de conduit pour le transport de l'eau de pluie ou potable sélectionnée.

2. Installation selon la revendication 1, **caractérisée en ce que** ledit ensemble comporte une chambre de qualité placée en parallèle d'au moins une des portions de conduit destinée à être placée sur le réseau d'alimentation en eau de pluie pour recevoir de l'eau de pluie circulant dans ledit ou un desdits réseaux et au moins un dispositif de mesure pour mesurer au moins un paramètre de ladite eau de pluie reçue dans ladite chambre de qualité.

3. Installation selon la revendication 1 ou 2, **caractérisée en ce qu'**elle comprend au moins un moyen pour modifier la qualité de ladite eau de pluie.

4. Installation selon l'une quelconque des revendications 1 à 3, **caractérisée en ce qu'**elle comprend un générateur de champ électrique pulsé ou une source de rayonnement ultraviolet pour l'élimination des micro-organismes présents dans l'eau de pluie.

5. Installation selon l'une quelconque des revendications précédentes, **caractérisée en ce que** chaque portion de conduit (16) destinée à être reliée à un réseau d'alimentation en eau de pluie est également reliée audit corps principal formant réservoir pour recevoir de l'eau potable, au moins une vanne permettant de choisir la nature de l'eau transportée par ladite portion de conduit.

6. Installation selon la revendication 5, **caractérisée en ce que** ladite vanne est configurée pour être actionnable à distance.

7. Installation selon l'une quelconque des revendications 1 à 6, **caractérisée en ce que** ladite installation comporte un moyen de communication sans fil pour envoyer et/ou recevoir des messages sur un réseau d'accès cellulaire.

8. Installation selon l'une quelconque des revendications 1 à 7, **caractérisée en ce qu'**elle comporte un ou plusieurs dispositifs de génération d'électricité solaire pour son alimentation en énergie de sorte que celle-ci est autonome.

## Patentansprüche

1. Hydraulische Anlage (10) zur Steuerung der Wasserversorgung eines Elements, wie beispielsweise eines wasserverbrauchenden Geräts, eines Wasserhahns, eines Ventils, eines Hydranten, wobei die Anlage wenigstens ein Trinkwasserversorgungsnetz und wenigstens ein Regenwasserleitungsnetz umfasst, die voneinander getrennt sind, **dadurch gekennzeichnet, dass**
- jedes Regenwasserleitungsnetz wenigstens einen Regenwasserspeicher (11) umfasst,
- jeder Speicher (11) auch wenigstens einen Füllstandssensor (13) umfasst, der dazu geeignet ist, ein Signal des Regenwasserfüllstands in dem entsprechenden Speicher (11) auszusenden,
- wobei die Anlage eine Zentraleinheit (14) zur Steuerung der Wasserversorgung des Elements umfasst, wobei das Element getrennt mit dem Trinkwasserversorgungsnetz und dem Regenwasserleitungsnetz verbunden ist, wobei die Zentraleinheit (14) dazu ausgebildet ist, das oder die Regenwasserfüllstandssignale zu empfangen und Ventile in der Anlage zu betätigen, welche so ausgebildet sind, dass sie fernbedienbar sind, um das Wasserversorgungsnetz des Elements zu steuern, so dass
- solange der Speicher (11) mit Regenwasser gefüllt ist, das einen Schwellenwert überschreitet oder diesem entspricht, das Element mit Regenwasser versorgt wird, und
- auf Anfrage oder wenn der Füllstand des Speichers (11) unter dem Schwellenwert liegt, Trinkwasser zur Versorgung des Elements verwendet wird,
- wobei die Anlage wenigstens einen Wasserzähler und/oder wenigstens einen Durchflussmesser (23) für wenigstens das Regenwasserversorgungsnetz umfasst,
- wobei jeder Wasserzähler und/oder jeder Durchflussmesser (23) mit der Zentraleinheit (14) verbunden ist, die ein drahtloses Kommunikationsmittel zum Übertragen von Daten aufweist, wobei die Zentraleinheit (14) dazu bestimmt ist, mit einem drahtlosen Kommunikationsnetz verbunden zu werden, oder jeder Wasserzähler und/oder jeder Durchflussmesser (23) für die drahtlose Übertragung von durch sie gemessene Daten ausgebildet ist, wobei jeder Wasserzähler und/oder jeder Durchflussmesser (23) dann dazu bestimmt ist, mit einem drahtlosen Kommunikationsnetz verbunden zu werden, und dadurch, dass
- die Anlage eine Wasserversorgungssteueranordnung (18) mit einem Hauptkörper umfasst, der einen Behälter zur Aufnahme von Trinkwasser bildet, wobei dieser Hauptkörper eine röhrenförmige Hülle (20) umfasst, die ein Innenvolumen mit dem Durchmesser D begrenzt, die im oberen Teil der Anordnung angeordnet ist und durch eine Reduzierung (21) des Hauptkörpers verlängert ist, die in Fluidverbindung mit der röhrenförmigen Hülle (20) steht, wobei die Reduzierung (21) einen geraden Querschnitt aufweist, der ein Teil eines Halbkreises mit dem Radius D/2 ist, wobei die Außenfläche der Reduzierung (21) abgerundet ist und in der Verlängerung der Außenfläche der röhrenförmigen Hülle (20) liegt, wobei der Hauptkörper im unteren Teil der Anordnung ein Gehäuse zur Aufnahme von zwei Pumpen (17, 22) der Leitungsabschnitte begrenzt, wobei jede Pumpe (17, 22) einerseits mit einem Leitungsabschnitt (16) verbunden ist, der mit einem getrennten Regenwasserversorgungsnetz verbunden ist, und andererseits mit einem Leitungsabschnitt für den Transport des ausgewählten Regen- oder Trinkwassers verbunden ist.

2. Anlage nach Anspruch 1, **dadurch gekennzeichnet, dass** die Anordnung eine Qualitätskammer umfasst, die parallel zu wenigstens einem der Leitungsabschnitte angeordnet ist, die dazu bestimmt ist, auf dem Regenwasserversorgungsnetz angeordnet zu werden, um Regenwasser aufzunehmen, das in dem oder einem der Netze fließt, und wenigstens eine Messvorrichtung zum Messen wenigstens eines Parameters des in der Qualitätskammer gesammelten Regenwassers umfasst.

3. Anlage nach Anspruch 1 oder 2, **dadurch gekennzeichnet, dass** sie wenigstens eine Einrichtung zum Ändern der Qualität des Regenwassers umfasst.

4. Anlage nach einem der Ansprüche 1 bis 3, **dadurch gekennzeichnet, dass** sie einen Generator für ein elektrisches Feld umfasst, das von einer Quelle ultravioletter Strahlung gepulst wird, um im Regenwasser vorhandene Mikroorganismen zu eliminieren.

5. Anlage nach einem der vorhergehenden Ansprüche, **dadurch gekennzeichnet, dass** jeder Leitungsabschnitt (16), der dazu bestimmt ist, mit einem Regenwasserversorgungsnetz verbunden zu werden, auch mit dem Hauptkörper verbunden ist, der einen Behälter zur Aufnahme von Trinkwasser bildet, wobei wenigstens ein Ventil die Wahl der Art des durch den Leitungsabschnitt beförderten Wassers ermöglicht.

6. Anlage nach Anspruch 5, **dadurch gekennzeichnet, dass** das Ventil dazu ausgebildet ist, aus der Ferne betätigt zu werden.

7. Anlage nach einem der Ansprüche 1 bis 6, **dadurch gekennzeichnet, dass** die Anlage ein drahtloses Kommunikationsmittel zum Senden und/oder Empfangen von Nachrichten über ein zellulares Zugangsnetz umfasst.

8. Anlage nach einem der Ansprüche 1 bis 7, **dadurch gekennzeichnet, dass** sie eine oder mehrere Vorrichtungen zur Erzeugung von Solarstrom für ihre Energieversorgung umfasst, so dass diese autonom ist.

## Claims

1. A hydraulic installation (10) for managing the water supply of a member such as a water-consuming device, a tap, a valve, a fire hydrant, said installation comprising at least one drinking water supply network and at least one rainwater conveyance network separate from each other, **characterised in that**
- each rainwater conveyance network includes at least one rainwater storage tank (11),
- each storage tank (11) also comprising at least one level sensor (13) able to emit a rainwater level signal in the corresponding tank (11),
- said installation comprising a central unit (14) for managing the water supply of said member, said member being separately connected to said drinking water supply network and to said rainwater conveyance network, said central unit (14) being configured to receive said rainwater level signal(s) and operate valves of the installation configured to be remotely operable in order to control the network supplying rainwater to said member, so that
- as long as said tank (11) is filled with rainwater to a level greater than or equal to a threshold value, supplying said member with rainwater, and
- using drinking water to supply said member on demand or when the level of said tank (11) is below said threshold value,
- said installation comprising at least one water metre and/or at least one flow metre (23) for at least said rainwater conveyance network,
- each water metre and/or each flow metre (23) being connected to said central unit (14), which includes a wireless communication means for transmitting data, said central unit (14) then being intended to be connected to a wireless communication network, wherein each water metre and/or each flow metre (23) being configured for the wireless transmission of data measured by the latter, each water metre and/or each flow metre (23) being then intended to be connected to a wireless communication network, and **in that**
- said installation including a water supply management assembly (18) comprising a main body forming a tank for receiving drinking water, this main body including a tubular casing (20) delimiting an interior volume of diameter D, which is placed in the upper part of said assembly and is extended by a reduction (21) of the main body, in fluid communication with said tubular casing (20), said reduction (21) having a straight cross-section which is a portion of a semicircle of radius D/2, the outer surface of said reduction (21) being rounded and placed in the extension of the outer surface of the tubular casing (20), said main body thus delimiting in the lower part of said assembly, a housing for receiving two pumps (17, 22) and portions of ducts, each pump (17, 22) being connected on the one hand to a portion of duct (16) connected to a separate rainwater supply network and on the other hand to a portion of duct for the transport of rain or drinking water selected.

2. The installation according to claim 1, **characterised in that** said assembly includes a quality chamber placed in parallel with at least one of the duct portions intended to be placed on the rainwater supply network to receive rainwater circulating in said or one of said networks and at least one measuring device for measuring at least one parameter of said rainwater received in said quality chamber.

3. The installation according to claim 1 or 2, **characterised in that** it comprises at least one means for modifying the quality of said rainwater.

4. The installation according to any one of claims 1 to 3, **characterised in that** it comprises a pulsed electric field generator or a source of ultraviolet radiation for the removal of microorganisms present in rainwater.

5. The installation according to any one of the preceding claims, **characterised in that** each duct portion (16) intended to be connected to a rainwater supply network is also connected to said main body forming a tank to receive drinking water, at least one valve allowing to choose the nature of the water transported by said duct portion.

6. The installation according to claim 5, **characterised in that** said valve is configured to be remotely operable.

7. The installation according to any one of claims 1 to 6, **characterised in that** said installation includes a wireless communication means for sending and/or receiving messages on a cellular access network.

8. The installation according to any one of claims 1 to 7, **characterised in that** it includes one or more solar electricity generation devices for its power supply so that it is autonomous.
